# EUROPEAN PATENT APPLICATION

(11) **EP 2 533 412 A2**
(43) Date of publication of application: **12.12.2012**
(21) Application number: 12170971.1
(22) Date of filing: 06.06.2012
(51) Int. Cl.: H02M 7/483, H02J 3/38

(54) **Solar power conversion apparatus**

(30) Priority: 08.06.2011 KR 20110055338
(71) Applicant: LSIS Co., Ltd., Dongan-gu, Anyang-si Gyeonggi-do 431-080 (KR)
(72) Inventor: Oh, Seunghun, 423-050 Gyeonggi-do (KR)
(74) Representative: HOFFMANN EITLE

(57) **Abstract**

Provided is a solar power conversion apparatus which includes at least one solar array receiving light and generating a DC power, a converter unit converting amplitude of the generated DC power, a multilevel inverter unit receiving the DC power from the converter unit to output AC power with multi levels and comprising a plurality of multilevel inverters, an AC filter insulating the inverter unit from a power grid, and a control unit applying a control signal to the converter unit and the multilevel inverter.

## Description

### CROSS-REFERENCE TO RELATED APPLICATIONS

The present application claims priority under 35 U.S.C. 119 and 35 U.S.C. 365 to Korean Patent Application No. 10-2011-0055338(filed on June 3, 2011), which is hereby incorporated by reference in its entirety.

### BACKGROUND

The present disclosure relates to a solar power conversion apparatus, and more particularly, to a solar power conversion apparatus using a neutral-point-clamped multilevel method as a hybrid method and having higher output level and lower distortion than a solar power conversion apparatus of the related art.

Solar power conversion apparatuses are apparatuses for converting a direct current generated in solar cells to an alternating current and transmit the alternating current to a gird. Full bridge type hardware is mainly used in solar power conversion. However, because of bad quality of power and low efficiency, recently, studies and demands on multilevel power conversion products are increasing.

Solar power conversion apparatuses of the related art have low power conversion efficiency because solar power conversion is inefficient and whole arrays are used as one input. Also, because of being operated usually in two or three output levels, solar power conversion apparatuses of the related art may have some problems such as not various power levels, low quality of power, and impossible modularization.

In order to solve those problems mentioned above, a multilevel power conversion apparatus has been developed. A multilevel power conversion apparatus has better efficiency and more stable quality than a full bridge type. There are three multilevel power conversion apparatus topologies: an H-bridge, a neutral-point-clamped, and a flying capacitor.

However, such a multilevel type also has a little high distortion and low power level.

### SUMMARY

Embodiments provide a solar power conversion apparatus using multi levels, and more particularly, a solar power conversion apparatus having lower distortion and higher output level than a related art solar power conversion apparatus by using a neutral-point-clamped multilevel method.

Embodiments also provide a solar power conversion apparatus having high efficiency by connecting two solar cells generating electric energy to a module as a solar power converting unit in order to increase efficiency.

In one embodiment, a solar power conversion apparatus includes: at least one solar array receiving light and generating a DC power; a converter unit converting amplitude of the generated DC power; a multilevel inverter unit receiving the DC power from the converter unit to output AC power with multi levels and comprising a plurality of multilevel inverters; an AC filter insulating the inverter unit from a power grid; and a control unit applying a control signal to the converter unit and the multilevel inverter.

Also, the converter unit may include at least one converter corresponding to the number of at least one of the solar arrays and connected to the solar array respectively.

Also, the multilevel inverters may include at least one of multilevel inverters connected correspondingly to the plurality of the converters.

Also, the multilevel inverter may include: a plurality of switching elements; a plurality of clamping diodes connected between the switching elements; and a plurality of bus capacitors

Also, the multilevel inverter unit may include (m-1) x2 switching elements where the m denotes the number of output levels.

Also, the multilevel inverter unit may include (m-1) clamping diodes where the m denotes the number of output levels.

Also, the multilevel inverter unit may include (m-1)/2 DC capacitors limiting a ripple of DC power.

Also, in case of a plurality of multi level inverters, each of the multi level inverters may output power of five levels and if the multilevel inverters are connected in series, the multilevel inverters may output power of nine levels

Also, the control unit may include: a converter gating unit for applying a gating signal to perform MPPT (maximum power point tracking) control on the converter; and an inverter gating unit for applying a gating signal to control the inverter

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram schematically illustrating a solar power conversion apparatus according to an embodiment.
Fig. 2 is a view illustrating the solar power conversion apparatus in detail according to the embodiment.
Fig 3 is a view illustrating one operation of the solar array, the DC-DC converter, and the multilevel inverter according to the embodiment.
Fig. 4 is a view illustrating states of the switching elements in the inverter according to each output level of the embodiment.
Fig. 5 is a view showing a switching order of the switching elements in the inverter according to the embodiment.
Fig. 6 is a view illustrating an output signal of the solar power conversion apparatus according to the embodiment.

### DETAILED DESCRIPTION OF THE EMBODIMENTS

Reference will now be made in detail to the embodiments of the present disclosure, examples of which are illustrated in the accompanying drawings.

It should be understood that the terms and words used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation for the invention.

Therefore, embodiments described in the specification and the example illustrated in the accompanying drawings herein is just a mere example for the purpose of illustrations only, not intended to represent all the technical aspects of the embodiment, the scope of the invention, so it should be understood that various equivalents and modifications thereof could be made at the time of filing.

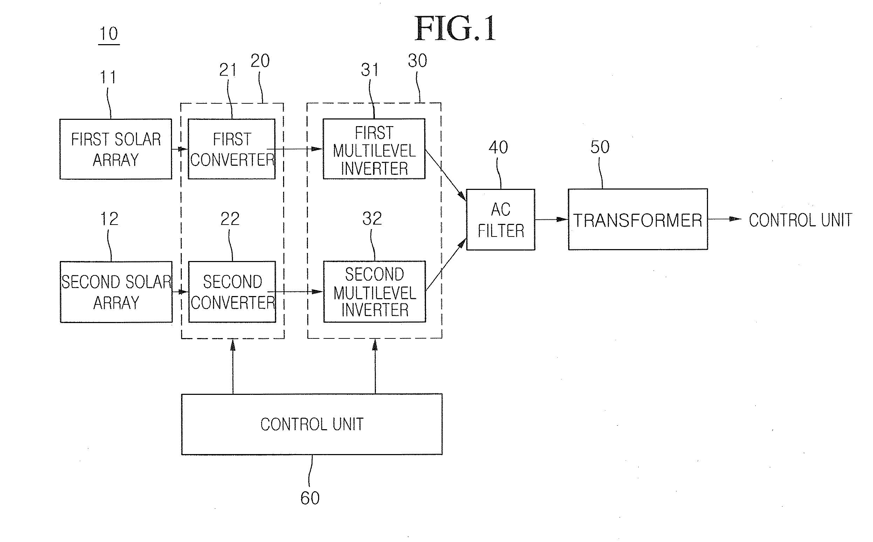

Fig. 1 is a block diagram schematically illustrating a solar power conversion apparatus according to an embodiment.

Referring to Fig. 1, a solar power conversion apparatus 10 includes the first and second solar arrays 11 and 12, a converter 20, a multilevel inverter 30, an AC filter 40, a transformer 50, and a control unit 60.

The solar arrays 11 and 12 receive light and generate DC power. That is, the solar arrays 11 and 12 may be solar cell arrays in which a plurality of solar cells are arranged to receive sunlight and generate power.

The converter 20 may include a DC-DC converter or a plurality of DC-DC converters respectively corresponding to the first and second solar arrays 11 and 12.

The multilevel inverter 30 may include a first multilevel inverter 31 and a second multilevel inverter 32. The first and second multilevel inverters 31 and 32 may output five power levels, respectively. If the first and second multilevel inverters 31 and 32 are connected in series, the first and second multilevel inverters 31 and 32 may output nine power levels. That is, the output level of the first and the second multilevel inverters 31 and 32 may depend on the configuration of the multilevel inverter 30.

In addition, although the first and the second multilevel inverters 31 and 32 are connected in series to generate nine power levels normally, if an error occurs at one of the first and the second multilevel inverters 31 and 32, the other normal multilevel inverter may be operated alone to output five power levels.

The AC filter 40 insulates the inverter 30 from a power grid.

The control unit 60 may apply a control signal to the converter and the multilevel inverter 30.

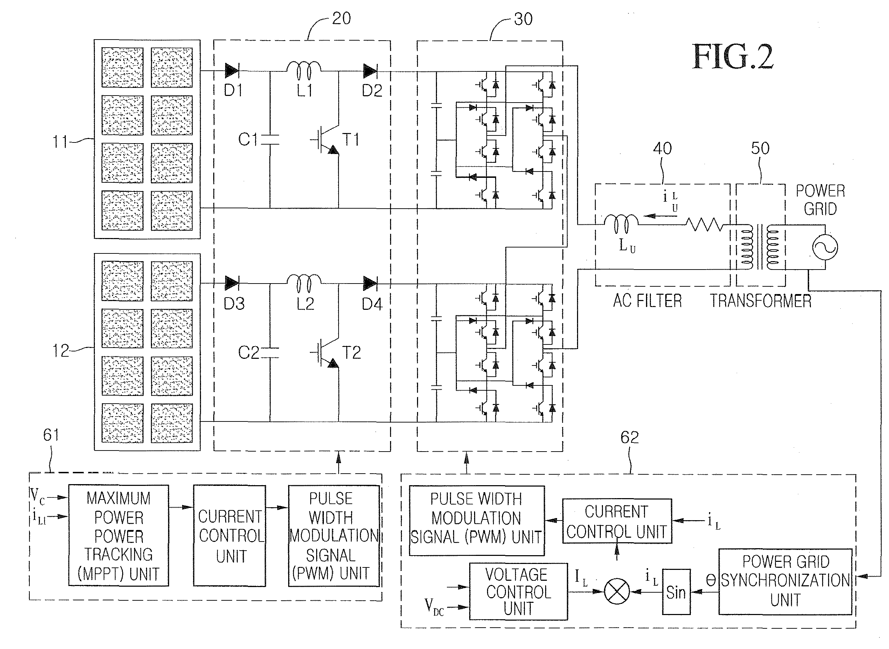

Fig. 2 is a view illustrating the solar power conversion apparatus in detail according to the embodiment.

Referring to Fig 2, first and second converters 21 and 22 of the AC-DC converter 20 may include diodes D1, D2, D3, and D4, capacitors C1 and C2, inductors L1 and L2, and switching elements T1 and T2, respectively.

The multilevel inverter 30 may include a plurality of switching elements, an insulated gate bipolar (IGBT), and a bus capacitor limiting a ripple of DC voltage. The respective inverters 31 and 32 are connected in series. The detail structure and operation of the multilevel inverter 30 will be described later.

The control unit 60 may include a converter gating unit 61 and an inverter gating unit 62.

The converter gating unit 61 applies a gating signal to the converter 20 for maximum power point tracking (MPPT) control.

The inverter gating unit 62 applies a gating signal for controlling the operation of the inverter 30. The inverter gating unit 62 may use a pulse width modulation signal (PWM) signal based on a carrier or a space vector PWM signal as a gating signal for controlling the operation of the inverter 30.

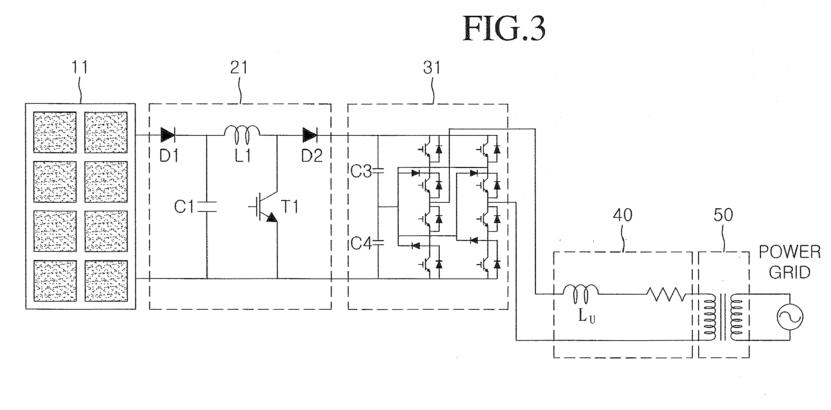

Fig 3 is a view illustrating one operation of the solar array, the DC-DC converter, and the multilevel inverter according to the embodiment. If one of the inverters 31 and 32 of the solar power conversion apparatus in Fig 2 cannot be operated due to an error, the apparatus may be operated on the condition illustrated in Fig 3.

A DC power generated in the solar array 11 is MPPT-controlled by the converter 21 in order to output a maximum output value and is transmitted to the multilevel inverter 31. The first converter 21 and the inverter 31 may be controlled by gating signals of the control unit 60, respectively.

The inverter 31 may output total five power levels according to the gating signal of the control unit 60. The inverter 31 may include a plurality of switching elements and two bust capacitors C3 and C4 limiting a ripple of DC voltage. Also as illustrated in Fig. 3, the switching elements are arranged in two rows each having 4 elements, and clamping diodes may be arranged between the switching elements. The switching elements may preferably be insulated gate bipolar transistors (IGBTs).

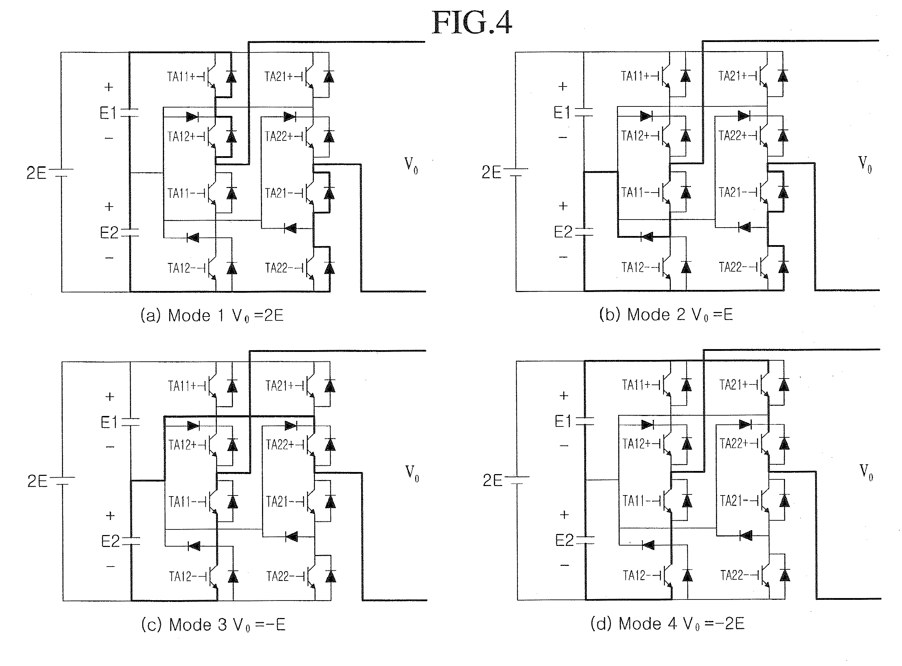

Fig. 4 is a view illustrating states of the switching elements in the inverter according to each output level of the embodiment.

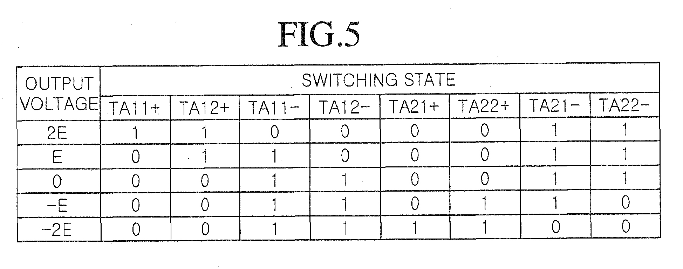

The multilevel inverter 31 may output total five power levels such as 2E, E, 0, -E, and -2E. '2E' means a voltage of power applied to the inverter 31. When outputting the power levels such as 2E, E, 0, -E, and -2E, the switching elements may be turned on as shown in the table of Fig. 5.

Fig. 5 is a view showing a switching order of the switching elements in the inverter according to the embodiment.

As shown in Fig. 5, if the state of switching is 1, the switching element may be on. If the state of switching also is 0, the switching element may be off. The five power levels may be generated by turning on the switching elements in an order according to a system clock as described above:,

In Fig. 3 or Fig. 4, the multilevel inverter 31 includes four pairs of interacting IGBT switches: (TA11+, TA11-), (TA22+, TA22-), (TB11+, TB11-), and (TB22+, TB22-).

In Fig. 4, (a), (b), (c), and (d) are exemplary views illustrating turned-on states of the switching elements according to output levels, wherein (a) shows the output power level 2E, (b) shows the output power level E, (C) shows the output power level -E, and (d) shows the output power level -2E.

Meanwhile, the number of elements required according to the number (m) of outputting multi levels is shown in Table 1 below.

**[Table 1]**

| | Flying Capacitor method | H-bridge cascade method | Diode clamp method | **Hybrid diode clamp method** |
|---|---|---|---|---|
| Main switching element | (m-1)x2 | (m-1)x2 | (m-1)x2 | (m-1)x2 |
| Clamping diode | 0 | 0 | (m-1)x(m-2) | (m-1) |
| DC bus capacitor | (m-1) | (m-1)/2 | (m-1) | (m-1)/2 |
| Balance capacitor | (m-1)x(m-2)/2 | 0 | 0 | 0 |

In Table 1, the hybrid diode clamp method is the method that the multilevel inverters are connected in series according to the embodiment.

Also, if two multilevel inverters are connected in series as illustrated in Fig 2, total nine power levels such as 4E, 3E, 2E, E, 0, -E, -2E, -3E, and -4E, may be outputted.

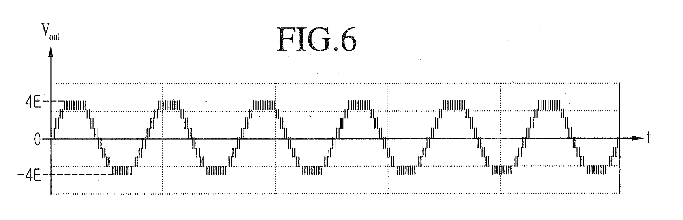

Fig. 6 is a view illustrating an output signal of the solar power conversion apparatus according to the embodiment.

As illustrated in Fig. 6, a signal of a required power level may be extracted from the output signal and then be transmitted to the power grid.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A solar power conversion apparatus comprising:
at least one solar array receiving light and generating a DC power;
a converter unit converting amplitude of the generated DC power;
a multilevel inverter unit receiving the DC power from the converter unit to output AC power with multi levels and comprising a plurality of multilevel inverters;
an AC filter insulating the inverter unit from a power grid; and
a control unit applying a control signal to the converter unit and the multilevel inverter.

2. The solar power conversion apparatus according to claim 1, wherein the converter unit comprises at least one converter corresponding to the number of at least one of the solar arrays and connected to the solar array respectively.

3. The solar power conversion apparatus according to claim 2, wherein the multilevel inverters comprise at least one of multilevel inverters connected correspondingly to the plurality of the converters.

4. The solar power conversion apparatus according to claim 1, wherein the multilevel inverter comprises:
a plurality of switching elements;
a plurality of clamping diodes connected between the switching elements; and
a plurality of bus capacitors.

5. The solar power conversion apparatus according to claim 1, wherein the multilevel inverter unit comprises (m-1) x2 switching elements where the m denotes the number of output levels.

6. The solar power conversion apparatus according to claim 1, wherein the multilevel inverter unit comprises (m-1) clamping diodes where the m denotes the number of output levels.

7. The solar power conversion apparatus according to claim 1, wherein the multilevel inverter unit comprises (m-1)/2 DC capacitors limiting a ripple of DC power.

8. The solar power conversion apparatus according to claim 1, wherein in case of a plurality of multi level inverters, each of the multi level inverters outputs power of five levels and if the multilevel inverters are connected in series, the multilevel inverters output power of nine levels

9. The solar power conversion apparatus according to claim 1, wherein the control unit comprises:
a converter gating unit for applying a gating signal to perform MPPT (maximum power point tracking) control-on the converter; and
an inverter gating unit for applying a gating signal to control the inverter.
